# EUROPEAN PATENT APPLICATION

(11) **EP 1 489 546 A1**
(43) Date of publication of application: **22.12.2004**
(21) Application number: 04102717.8
(22) Date of filing: 15.06.2004
(51) Int. Cl.: G06F 17/60, A01F 25/00, B65D 88/00, B01F 15/02

(54) **Computer-assisted management of the processing of an agricultural product**

(30) Priority: 20.06.2003 US 480177 P; 01.07.2003 US 484434 P; 19.03.2004 US 805614; 19.03.2004 US 805660
(71) Applicant: DEERE & COMPANY, Moline, Illinois 61265-8098 (US)
(72) Inventor: Gaddis, David Alan, 30188, Woodstock (US); Pape, William Robert, 87551, Los Ojos (US); Powell, John Carl, 30040, Cumming (US); Pace, James Robert, 30075, Roswell (US); Meyer, Michelle Lee, 30040, Cumming (US); Polcari, Philip Carl, 30024, Suwanee (US); Binnix, Bruce Neil, 06492, Wallingford (US); Sweat, Michael Tom, 64154, Kansas City (US); Niswonger, Richard C., 85326, Buckeye (US)
(74) Representative: Holst, Sönke, Dr.

(57) **Abstract**

A raw material is stored in a storage container. The stored raw material is physically processed in the storage container to obtain a processed material based on the raw material. Link data is recorded for associating the raw material with the processed material across any transformation between the raw material and the processed material.

## Description

### Field of the Invention

This invention relates to a method and system for computer-assisted management of the processing of an agricultural product.

### Background of the Invention

Agricultural products may include grains, oilseeds, and other crops. In the past, agricultural products have often been regarded as commodities. For example, corn from different suppliers was typically mixed at a local grain elevator regardless of a the genetic content, nutritional value or variety of the particular corn.

Technological advances in plant science and testing make it possible to introduce desirable traits into agricultural products through genetic modification, environmental influence or otherwise. Differentiated traits may include enhanced nutrition, special protein profiles, and pharmaceutical properties of agricultural products, among other characteristics. Certain processors and consumers of agricultural products may desire agricultural products with certain characteristics or traits to produce various end products based on one or more agricultural products.

Agricultural products may be stored at grain elevators, farms, storage facilities at processors, and other storage infrastructure. Regardless of where the agricultural product is stored, a need exists to track agricultural product to facilitate the flow of information from the grower to the processor and to any recipient of the agricultural product or a derivative thereof from the processor. Accordingly, the need exists for an information management system that supports storage, processing, and transactions associated with agricultural products and derivatives thereof.

### Summary of the Invention

A raw material is stored in a storage container. The stored raw material is physically processed to obtain a processed material based on the raw material. Link data is recorded for associating the raw material with the processed material across any transformation between the raw material and the processed material. The retrieval or data processing of the recorded link data is used for management of at least one of an agricultural product and a storage container associated with the agricultural product.

### Brief Description of the Drawings

FIG. 1 is a block diagram of a system for managing an agricultural product or a derivative thereof.

FIG. 2 is a flow chart for a method for managing an agricultural product or a derivative thereof.

FIG. 3 is a flow chart of an alternate embodiment for managing an agricultural product or a derivative thereof.

FIG. 4 is a block diagram of an architecture for managing an agricultural product.

FIG. 5 is a flow chart that illustrates a process for managing processing and storing of an agricultural product.

FIG. 6 represents a flow chart of the basic stages of a milling process that may be supported by the computer-assisted management of the invention.

FIG. 7A shows one illustrative example of a blending operation.

FIG. 7B shows a traceability map corresponding to the blending operation of FIG. 7A.

FIG. 8A shows another illustrative example of a blending operation.

FIG. 8B shows a traceability map corresponding to the blending operation of FIG. 8B.

FIG. 9 is a diagram of a data hierarchy that may be applied to the management of an agricultural product.

FIG. 10 is a prior art chart that illustrates a French grading standard for wheat.

FIG. 11 is a prior art chart that illustrates a U.S. Department of Agriculture (USDA) grading standard for wheat.

FIG. 12 is a flow chart for managing an outbound shipment of an agricultural product.

FIG. 13 is a flow chart for managing a blending of an agricultural product.

FIG. 14 is a flow chart for the sampling of an agricultural product from a particular storage container.

FIG. 15 is a flow chart of a process for sampling the contents of a storage container.

FIG. 16 is a flow chart of a process for testing or measuring an attribute of an agricultural product associated with a storage container.

FIG. 17 is a flow chart of a process for adjusting a discrepancy between a received agricultural product and an expected agricultural product.

FIG. 18 is a block diagram of an alternate embodiment of FIG. 1.

### Description of the Preferred Embodiment

Various definitions of terms are provided herein to enhance comprehension of the subsequent matter described herein. The terms are generally presented in alphabetical order for convenience and ready reference.

**Agricultural product**: An agricultural product refers to any edible product or inedible product, or derivative of either, including any fruit, vegetable, seed, fiber or other plant material produced from or by any plant life whatsoever. Further, an agricultural product also includes any edible or inedible product that is comprised of animal material, plant material, processed plant material or processed animal material, or a derivative of any of the foregoing items, in whole or in part.

An agricultural product may have various states. The states may include a raw material, an intermediate product, and a final product. Between each state, the agricultural product may undergo a transformation. The agricultural product is associated with an agricultural product identifier. The agricultural product identifier may be associated with any state of the product and may be assigned to the agricultural product when the agricultural product is a raw material or during any state thereafter. Link data provides a link between the transformation from one state to another of the agricultural product. In one example, the agricultural product and the associated link data collectively provide the identity of the agricultural product and its latest state. The state of the agricultural product may change over time as the agricultural product progresses through processing or manufacturing.

Attribute: A measured attribute of the agricultural product may include one or more of the following: moisture content, dockage, test weight, shrunk and broken content, protein content, foreign material, damaged kernels, class, grade, and sample grain factors. Sample grain factors may comprise animal filth, cockleburs, glass, stones, toxic seeds, unknown foreign substances, flint, flint and dent, infested grain, and waxy grain. Cockleburs are plants which yield prickly fruit or the fruit from such plants. Dockage may relate to the deduction in recorded weight of a commodity or a corresponding price that is taken or withheld because of some defect in the commodity. Dockage may refer to a quantity of foreign material in grain. Flint refers to small stones, rocks, gravel or any hard objects that may comprise part of the foreign material in the grain. Infested means that the agricultural product is infested or contaminated with insects, rodents or another pest. The agricultural product may be associated with a grade, a grade name or another ranking. For example, the agricultural product may be ranked in the following grade scheme: U.S. no. 1, U.S. no. 2, U.S. no. 3, U.S. no. 4, U.S. no. 5, and U.S. sample grade.

**Blend**: A blend defines the desired qualities of available input lots that may be combined into a new resultant lot for delivery. In one embodiment, the amounts of each input lot blended could be modified on a virtual or electronically simulated trial-and-error basis until the desired combination of qualities is experimentally determined for the resultant lot. In another embodiment, an operator may calculate the resultant lot working backwards from a given a set of target criteria.

**Commodities**: Commodities refer to fungible crops with ubiquitous or standard characteristics. Examples of commodities include certain varieties of corn, soybeans, and wheat that do not have any differentiated traits or characteristics. However, other varieties of corn soybeans and wheat may have differentiated characteristics.

**Crop class:** A crop class refers to a classification or category of a commodity. Examples of crop classes include yellow corn, white corn, mixed corn, yellow soybean, mixed soybean, hard red spring wheat, durum wheat, hard red winter wheat, soft red winter wheat, soft white winter, wheat, hard white wheat, and unclassified wheat.

**Event**: An event is an occurrence recorded by a data processing system. An event may be categorized by event type. An event can affect a lot, an operator, a ticket, a bin, a source, a destination or a product used in conjunction with a bin or a lot. An event may have a beginning time stamp, a beginning date stamp, an end time stamp, and an end date stamp which reflects an actual time of occurrence of the event or a computer clock time correlated thereto. The beginning time and the end time may be the same, but can be distinctly different based upon the event type. An event may be memorialized by a recording time that differs from the transaction time. The recording time represents the time in which the event or transaction was recorded, as opposed to the time of occurrence of the event. An event can describe product usage. For example, the chemical used in fumigating a bin is an event. A collection of events is an operation.

An event includes any of the following items: adjustment of a lot of an agricultural product, aerate, apply treatment, clean bin, clean lot, combine lot, create lot, delete lot, empty bin, fumigate, lock, measure up, process ticket, remove lot, reserve space, sample bin, sample lot, store lot, turn bin, and unlock. Lock means a storage container (e.g., bin) is prohibited from having any subsequent operation effect it until the storage container is unlocked. A particular event may be associated with an event identifier to distinguish the event from other events. Further, each event may be associated with an event status, including one or more of the following: open, pending, canceled, completed, and closed.

**Grade**: A grade is an official grading label and criteria. A grade label and criteria may vary by country. A grade factor is an attribute with associated value(s), standardized for each crop type, that may form the basis for the grade assigned to a lot (e.g., damaged kernels with value of one percent). For example, the grade factor criteria for USDA Grade No. 1 wheat has a maximum of two percent damaged kernels, among other criteria. A grade factor of an agricultural product within a bin is established by using the weighted average of the grade factors of one or more lots associated with the bin.

**Lot**: A lot is a unique, defined quantity of an agricultural product (e.g., a commodity) with presumed homogeneous qualities (e.g., crop type, class, grade factors or traits). An incoming ticket may spur the creation of a new lot (e.g., typically a full or part truckload). A lot is contained by or at least partially within a bin or storage container. A lot may be described by having one or more of the following characteristics: crop class, traits and trait values, a variety, grade factors and values, a calculated grade, and commodity. A lot can have events or an event history associated with it.

A lot is considered transferred, blended or deleted upon reaching a quantity of zero, unless logical rules dictate otherwise. A lot may be adjusted to compensate for discrepancies. Lots are generally processed according to the storage container's flow-type, unless the storage container's flow-type has been overridden by an operation. A lot is associated with a corresponding source. A lot is uniquely assigned to a corresponding storage container or bin. The same lot can not exist in two storage containers or bins. When a lot is transferred to another bin or shipped outbound, a new lot is created by the data processing system. A lot is generally not associated with more than one bin. A new lot generally maintains a historical relationship with any previous storage container or bin with which it was associated. Anytime a new lot is created as a result of a blend, then the operator or the data processing system may provide a new lot name. Anytime a lot is transferred, the operator or data processing system may provide a new name for the transferred lot.

**Management**: Management of an agricultural product may include any of the following: bin allocation planning, receiving raw material loads, tracking bins, blending operations, mixing operations, and shipping outbound agricultural product.

**Operator**: An operator is a user of the data processing system that has a defined set of role-based permissions. Each role is assigned a set of permissions to execute specific operations. For example, a facility manager has permissions to set up all operators of the system, whereas an ordinary operator cannot.

**Operation**: An operation defines an occurrence or collection of one or more events. For example, an aerate operation may comprise the following group of events: lock a bin, aerate a bin, and unlock a bin. An operation refers to a task accomplished or undertaken by a mill that may apply to an agricultural product, a storage container, or both. The tasks include: aerate, allocate, blend, transfer, clean bin, clean lot, delete lot, empty bin, fumigate, lot adjustment, measure (agricultural product), receive (inbound agricultural product), sample bin, sample lot, ship (outbound), ticket adjustment, turn bin, weigh, and transfer. The task flow of an operation comprises various events that take place in a designated order to complete an operation.

**Organization:** An organization is a business entity that is uniquely identified in a data processing system. For example, an organization may be identified by a DUNS number (Dunn & Bradstreet). An organization is associated with an address, phone number(s), and persons associated with it.

**Shrink value:** Shrink value is the percentage difference between the input of a lot or agricultural product in volume or weight compared to the output of a lot in volume or weight. For example, corn is loaded into a bin at an incoming volume and an incoming moisture and aerated to dry it to a desired moisture content. The outgoing moisture would decrease from the incoming moisture and the outgoing volume of the corn would be lower than the incoming volume.

**Storage container or bin**: A storage container or bin may comprise any container, room, enclosure, or any other volume for storing, holding or otherwise containing an agricultural product. A storage container or bin exists at a corresponding location. One or more storage containers are assigned to a corresponding location. A storage container may contain zero, one or more lots of an agricultural product. The current status of a bin has a weighted average of the contained lots' crop trait values, grade factor values, classes, and pack-factor. A bin is also attributed as active or inactive and has a capacity/volume. Each bin has a flow type, physical shape type, a lock status type, and events associated with it.

A storage container can have an assigned type that will allow operators to quickly identify the agricultural product (e.g., a commodity, such as corn, wheat or flour) that is stored in the bin.

A bin may be associated with two sets of information regarding quantity, grade factor, commodity, and grade: (1) Weighted averages calculated by the system and (2) Actual values. The actual values may be determined from taking samples or test measurements of an agricultural product with a bin, for instance, or validating weights through a weight checking procedure. A bin's weighted averages may be calculated in accordance with various procedures. For example, a bin's weighted averages can be calculated any time a lot is created or adjusted. The weighted averages or expected quantities of agricultural products may be adjusted to reduce or eliminate discrepancies. A storage container or bin is affiliated with a corresponding lock status. The lock status may be selected from any of the following: Lock, Locklnbound, LockOutbound, and Unlock. In one embodiment, the operator can override this lock status during the completion of an operation. A bin is associated with a corresponding online/offline status that controls if a bin is considered available for use. The on-line/off-line status generally cannot be overridden. If a bin is offline, no operations may be performed against it.

A bin may not be marked as deleted if it contains a quantity of an agricultural product. The quantity must be dealt with first. "Deleted" bin information will generally still show up in historical reports. "Deleted" bins will not be available for current or future operations. A bin has a default flow-type of any one of the following: first-in, first-out (FIFO), last-in, last out (LIFO), or perpetual. The flow type defines the movement of lots into and out of the bin. The default flow-type may be overridden on an operation-by-operation basis.

The perpetual flow-type causes the lots in a bin to flow out by a weighted percentage determination. The FIFO flow-type causes the lots in a bin to flow in a first-in, first-out manner. The LIFO flow-type causes the lots in a bin to flow in a last-in, first-out manner. An event has only one status at any given time: executing, completed or canceled.

**Ticket**: A ticket refers to a document, file or data record that describes an incoming lot, an outgoing lot, a store lot, a processed lot or some other identifiable unit of a particular agricultural product. The incoming ticket may describe the agricultural product (e.g., commodity) source, amount, genetics, management practices, and events prior to the lot entering the data processing system that is receiving the incoming lot. The following information is typical for an incoming ticket: grower business entity affiliation, grower or producer name and address, farm address and farm number, field address and field number, seed variety/lot/batch (seed tag information), product application(s), tillage practices, driver, truck number and vehicle license number, commodity, contract number (if applicable), unload information, date and time stamp of unload, unload weight, net quantity, licensed inspector, licensed weigher, grades, tare weight, moisture percent, damage percent, and foreign material percent. A ticket may be associated with a ticket status including one or more of the following: open, pending, and closed. An internal ticket may be used to manage transfers and blends of materials between storage containers at a location. For example, the internal ticket may capture a commodity identifier, a date range, and a grade factor.

**Trait**: A trait is one defined attribute of many that describes a corresponding crop variety or agricultural product. Examples traits include high oil, Roundup-Ready agricultural products, corn-borer resistant corn, and many others. Roundup-Ready is a trademark of Monsanto Corporation.

**Variety**: There are units of measure (UOM) that support data management of agricultural products. A UOM is of a type, for example, length, mass, etc. Compound units of measure exist, such as velocity or acceleration, as do ad-hoc UOM's such as bag or count. A crop variety may have a corresponding set of traits and a class. Each class has a commodity and multiple grade factors. Each grade is associated with a commodity. There are products characterized by product types. Product types are the hierarchy of product categories, such as pesticide, fertilizer, and fumigant. Varieties define the specific genetic make-up of a crop class. Varieties may be published by the seed companies on a yearly basis (e.g., crop class may be soybean; variety may be 92B75; the corresponding description may be Roundup-Ready resistant seed).

The computer-assisted management system and method supports the management of storage containers for housing agricultural products. Such agricultural products may include raw materials (e.g. wheat, grain, corn or soybeans), intermediate processed materials (e.g., malted barley, crushed soybeans or plant-derived crude oil), and processed ingredients (e.g., wheat flour). The computer-assisted management system is designed to support the management of raw materials as they are stored, combined, and transferred among storage locations within a farm, an elevator or other handling facility, an ingredient processing facility, such as a flour mill, or a final processing facility such as a bakery. In one illustrative embodiment, the system and method provides tracking of storage and blending information within a mill or processing plant. Lots may be associated with bins to track trace elements or components from one cleanout to the next cleanout. A lot may contain trace elements of every lot associated with the bin since the last successful CleanBin event. Records are also maintained in case any bin cleaning is not completely effective and trace element residue remains to support cross contamination identification and efficient recall of agricultural products. Lot identity is preserved as product is transformed during any bin management operation. A lot that is created from a blend will be associated back to all of the lots participating in the blend and also retain the trace elements from previous constituent lots.

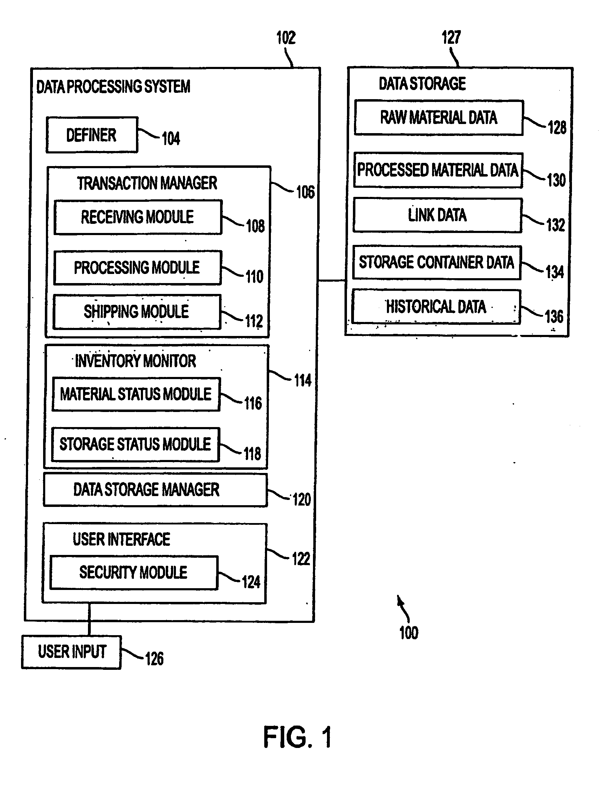

FIG. 1 shows a block diagram of an information processing system 100 for managing an agricultural product. The information processing system comprises a data processing system 102 coupled to a data storage 127 device. A user input 126 is associated with the data processing system 102 for data input, data output, or both. The data processing system 102 comprises a definer 104, a transaction manager 106, an inventory monitor 114, a data storage manager 120, and a user interface 122. The definer 104 may be used to configure the transaction manager 106 and the inventory monitor 114. The transaction manager 106 includes a receiving module 108, a processing module 110, and a shipping module 112. The inventory monitor 114 includes a material status module 116 and the storage status module 118. The data storage 127 device stores one or more of the following: raw material data 128, processed material data, link data 132, storage container data 134, and historical data 136.

The definer 104 allows a user to define a storage site and storage containers for storing any of the following agricultural products: raw material, processed material, a derivative of the raw material or processed material, and other material. The user may define the storage site as a graphical representation, a textual representation, or combination of both. The user may select bins or storage containers to be used on a given time window (e.g., a day) to manage a facility. The user may classify these bins as active in the system 100. The user may route loaders, belts, and pits to selected on-line or available bins consistent with one or more defined time windows. In one embodiment, the user confirms that all other bins are locked in the system during a particular time window to assure accurate loading or transfer materials to or from a particular bin. The definer 104 provides a tool to establish data representative of multiple facilities, with multiple locations and multiple bins for each location, for a single business enterprise. Locations are independent of each other and may have bins named the same, but each bin is physically and logically different. The definer 104 may define a bin with a shape-type, dimensions or capacity, pack factor, and name. Further, the definer 104 may assign a facility and location to each corresponding bin.

The transaction manager 106 comprises a receiving module 108, a processing module 110, and a shipping module 112. The transaction manager 106 stores information on each transaction, including link data 132 that links raw material data 128 to processed material data 130 for an agricultural product. The raw material data 128 is associated with corresponding raw material. The processed material data 130 is associated with corresponding processed material. The processing module 110 supports processing of a raw material, a processed material, or both. The processing module 110 may keep records of one or more of the following processes associated with particular material: blending, mixing, fumigating, treating, heating, cooling, chemical processing, pressure treating, drying, crushing, reacting, preserving, cooking, distilling, fermenting, and adding moisture.

The inventory monitor 114 aggregates the status of each storage container to provide an overall status of operation to a user. The inventory monitor 114 may include a material status module 116 and a storage status module 118. The material status module 116 monitors the status, state and attributes of materials and material attributes, whereas a storage status module 118 monitors the status, states, and attributes of various storage containers.

The data storage manager 120 supports data entry and retrieval of data associated with the data storage device 127. The data storage device 127 stores one or more of the following types of data: raw material data 128, processed material data 130, link data 132, storage container data 134, and historical data 136. Raw material data 128, processed material data 130, storage container data 134, historical data 13, and link data 132 may be organized in a structured data format data such as Microsoft Excel Worksheet, comma separated values (CSV), and extensible markup language (XML). The Excel format will allow the user to transfer the data directly into Microsoft Excel without performing the import/convert step. The CSV and XML formats will allow the user to import the data into a variety of other tools including, but not limited to, spreadsheet programs other than Microsoft Excel, database programs, financial programs, enterprise databases, and custom software programs.

The user interface 122 may support a graphical user interface 122 for a user. A graphical user interface 122 may include a display, a keyboard, and pointing device (e.g., a mouse) or any combination of the foregoing items. The graphical user interface 122 may support entering data, manning controls, and outputting data for a user. In the embodiment of FIG. 1, characteristics of agricultural products (temperature, moisture, etc.) may be read by the operator from measurement devices and manually entered into data processing system 102 via the user interface 122. A security module 124 may limit access of certain data entry control and data output to certain corresponding authorized users. The user interface 122 is not required to enforce data integrity, business rules, or data validation, because these items will be handled elsewhere in the data processing system 102.

The data processing system 102 will operate in a disconnected mode or a connected mode. In the connected mode, the data processing system 102 communicates via a communications network (e.g., the Internet) or a communications link to other data processing systems (e.g., enterprise resource planning (ERP)). In the disconnected mode, the data processing system may archive data to be exchanged or communicated with external providers for subsequent communication pursuant to a store-and-forward configuration.

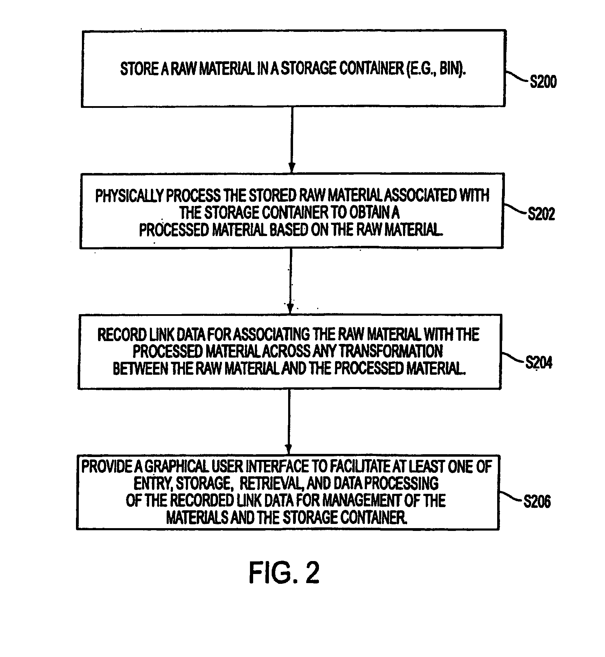

FIG. 2 illustrates a method for managing storage containers for storing materials. The method of FIG. 2 begins in step S200..

In step S200, a raw material is stored in a storage container or bin. Step S200 may include one or more of the following ancillary activities: (1) storing raw material data 128 on the raw material and storage container in the data storage device 127; (2) allocating inbound agricultural material and receiving inbound agricultural material; (3) managing discrepancies in the quantity, attributes, identities, and/or descriptions of incoming product (e.g., adjusting tickets indicative of receiving the agricultural material); and (4) storing the raw material in one or more containers pursuant to a bin allocation plan. The raw material may be associated with farm data, grower data, scale data, and lab data.

In step S202, the stored raw material is physically processed to obtain a processed material from the stored raw material. The processing may be accomplished in accordance with one or more techniques, which may be employed alternately or cumulatively: under a first technique, stored raw material is transferred between or among storage containers, or otherwise, and blended to form a resultant agricultural product. The resultant agricultural product is produced by blending one or more raw materials in defined proportions. Under a second technique, a storage container or bin is aerated. Under a third technique, a storage container or bin is fumigated with a chemical treatment (e.g., a rodentcide or a pesticide). Fumigation may require the specification of the agricultural product and quantity of the product for the selection and appropriate exposure to, or dosage of, the chemical treatment. In one example during fumigation of a particular bin, the particular bin is considered locked for inbound transfers and outbound transfers in the time duration between the start time and the end time during the fumigation. Under a fourth technique, a storage container or bin is turned or rotated. Under a fifth technique, tests are completed on the contents of the storage container to determine a quality, trait, characteristic or trace element in the agricultural product. Under a sixth technique, a measured quantity of the contents of one or more storage containers or bins is entered or tracked. Under a seventh technique, a product lot in a bin is sampled for testing (e.g., levels or the presence of traits are tested). Under an eighth technique, an agricultural product in a storage container or bin is cleaned. Under a ninth technique, hypothetical blend model is used to determine an actual blend of one or more agricultural products in bins. Under a tenth technique, attributes are measured on a product in a bin to update the agricultural product to adjust lot information. For example, an attribute (e.g., weight) of a lot of an agricultural product within a bin may be adjusted based on the measured attributes.

In step S204, a data processing system 102 records link data 132 for associating the raw material with the processed material across any transformation between the raw material and the processed material. The link data may allow farm data, scale data, and lab data for the raw material to be associated with the processed material or a finished agricultural product, for example.

In step S206, the data processing system 102 provides a user interface 122 (e.g., graphical user interface) to facilitate at least one of data entry, data storage, data retrieval, and data processing of the recorded link data 132 for management of the materials and the storage container. In a first illustrative example, the user interface 122 allows a user to view a single status screen that provides not only the general status of the storage containers at a particular location, but also provides the mechanism to activate various bin management functions of individual storage containers at the particular location. In a second illustrative example, the user interface 122 provides an event report per storage container based on the date range selection to allow the user to view an event history associated with a particular storage container or bin. For instance, the user may want to see any of the following: (1) the last time in which a particular bin was locked and the duration of the lock to be aerated, (2) a report on a single bin when the last clean out was done, (3) a report on a single bin for moisture checks, date, and time, (4) a report on a single bin for checks on fumigation events for a single bin, and (5) a report on which operators performed transfers of lots for a certain date/time frame.

In accordance with a third illustrative example, the user interface 122 supports the provision of a producer report. A transaction manager 106 of the data processing system 102 has the ability to query ticket information or receive data on agricultural products for producers who have provided a certain agricultural product to a certain storage or processing facility. For instance, the user may view the high volume producers for a type of commodity or agricultural product applicable to one or more processing facilities.

In accordance with a fourth illustrative example, the data processing system 102 supports tracking of the use of one or more agricultural products in processing operations or otherwise. For instance, the data processing system 102 may provide volumes or quantities of particular agricultural products associated with one or more corresponding storage locations (e.g., bins) across facility and locations. In one embodiment, the agricultural products may be sorted by commodity, class, and trait information. A user is given visibility on whether the capacity of a particular facility is full or how many additional shipments can be received and in what time frame agricultural products can be physically stored on a bin-by-bin or facility basis.

In accordance with a fifth illustrative example, the data processing system may track performance associated with corresponding agricultural products and the quantity of various agricultural product. For instance, the plant manager requests summaries of all storage units for inbound and outbound agricultural products to compare shrink values. Bin quantity and quality information may be archived on satellite locations or affiliated facilities. The user can adjust buying or contracting methods knowing what inventory is available locally for a certain commodity and quality trait and what inventory is off site or within a certain region. A purchase contract can be completed via the transaction manager 106 to receive monthly shipments saving time on scheduling or searching using other methods.

In accordance with a sixth illustrative example, a blending calculator of the data processing system 102 may determine target blends. In one embodiment, the user requests data summaries of one or more bins, including the names, varieties, and traits of the most recently stored lots and the next several lots available for withdrawal in each bin. The quantities to be drawn from each of the bins may be determined by using the blending calculator of the processing module 110 to estimate the best blend to meet predefined specifications. The blend manager of the processing module 110 can schedule, commit, and execute the blend or cancel and select other bin quantities.

In accordance with a seventh illustrative example, the data processing system 102 may provide a lock history report that indicates an associated storage location and whether a particular bin is locked or unlocked. For instance, a user may want to track the lock history of one or more shipments, but requests a bin list of locked bins and the event for which it is locked. This would include date/time stamp of when the bin was locked to estimate by event when it can be unlocked.

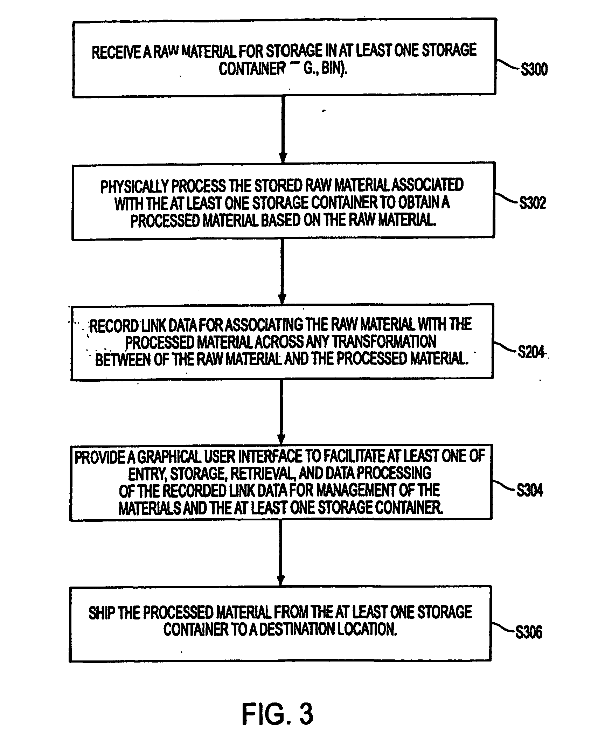

FIG. 3 is a method for managing the flow of an agricultural product through a processing operation. The method of FIG. 3 begins in step S300.

In step S300, a raw material is received for storage in at least one storage container. An operator receives a new delivery (e.g., truckload) of an agricultural product (e.g., grain). An operator enters receiving information (e.g., a scale ticket information) into the user input device. The receiving information may include commodity type and grade factors. The operator segregates shipments of raw materials to different pits by variety or identity of the raw materials.

Receiving raw material is introduced into the data processing system 102 on an incoming ticket, for example. The incoming ticket contains information that allows the data processing system 102 to create a lot. Each lot is with the associated attributes such as commodity designation, grade factors, traits, and any other relevant attributes associated with the raw material. An incoming ticket can represent one lot or multiple lots with distinct destination storage containers.

In step S302, the stored raw material is physically processed to obtain a processed material based on the raw material. Step S302 may be carried out in accordance with various techniques that may be executed cumulatively or alternately.

In accordance with a first technique, step S302 may include blending raw materials to specifications and verifying the quantities of materials and the quality of materials on hand in the storage containers or in inventory to meet the processing or blending requirements. A worker, sensor or automated monitor watches levels of bins by measuring, detection, inspection or observation. In one embodiment, a worker enters or loads test sample results into a data processing system and enters measure-up results into the data processing system 102 to obtain true bin levels or quantities of the raw materials in the storage containers. The data processing system 102, worker, or both, determine whether additional quantities of raw materials or agricultural products are needed to meet production requirements or other business needs based on current inventory from the reports. Further, in one configuration, the inventory manager outputs producer list and contacts producers to fulfill lot or order for a given day.

In accordance with a second technique, a user determines fumigation or aeration events to be conducted within a bin and enters operations into data processing system 102. A user obtains the customer specifications for a given outbound delivery. A user evaluates the specifications to identify specific factors to be met (e.g., yellow corn, grade #2, no more than 6 percent of a particular trait, protein 12.6 percent or higher. Facility manager goes through the selection criteria to determine the quantities and characteristics of raw materials in the bins needed to meet specifications. Facility manager selects the amount of raw materials having the desired characteristics from specific bins that is needed to complete the blend.

In accordance with a third technique, any combination of the following procedures may be used to execute step S302. Each individual procedure may be assigned a name or designation, such as Aerate, Allocatelnbound, Allocate0utbound, BlendTransfer, CleanBin, CleanLot Transfer, or as otherwise assigned by a programmer or user of the data processing system 102. Aerate refers to applying air or heated air to the contents of a storage container to dry the contents (e.g., grain). Allocatelnbound refers to the reservation of space in a particular bin for future transfer of an agricultural product (e.g., grain). AllocateOutbound refers to reserving a part or whole lot for a future shipment. BlendTransfer refers to one or more lots of grain that are blended while being transferred to a storage bin.
CleanBin refers to a storage bin that is cleaned to prepare the bin to store an agricultural product (e.g., grain) and to avoid contamination with the previous contents of the bin. CleanLotTransfer refers to a lot that is cleaned to improve its purity. DeleteLot means that a lot is removed from the system for some reason other than transfer or ship. EmptyBin means that a bin is flagged or marked as empty either by transfers, deletes or manual adjustment. LotAdjustment refers to adjusting a lot to change its quantity, commodity or grade factors. MeasureUp means a person or other device measures the actual physical contents of a particular storage container and adjusts estimated or determined lot data on the contents of the particular storage container to be synchronized with actual lot data on the actual physical contents of the particular storage container. A shipment of grain is received by one or more storage containers or bins. SampleBin means that a sample of a bin is recorded and the lot(s) are adjusted, if necessary. SampleLot means that a sample of a lot is recorded and the lot is adjusted, if necessary. Ship Lot(s) are transferred out of the storage container to indicate the lot(s) have left the facility. TicketAdjustment means that an existing ticket is adjusted. TurnBin means that a bin's contents are turned back into the same bin. WeighupTransfer means that a bin's contents are transferred to a bin in order to calculate the weight of the contents.

A MeasureUp on a bin setup without dimensions will accept a calculated quantity only. (i.e., it will not capture the measurements since it would not have the bin dimensions to reconcile against.) If the bin was set up with dimensions, a MeasureUp will capture particular measurements based on the type of the bin.
A MeasureUp requires an operator and bin. A MeasureUp event is recorded with the system date/time; MeasureUps that have occurred in the past (i.e., MeasureUp occurred 10 hours ago and grain levels have changed in the bin) are not relevant.

In step S204, link data is recorded for associating the raw material with the processed material across any transformation between the raw material and the processed material.

In step S304, a user interface 122 (e.g., a graphical user interface) is provided to facilitate at least one of entry, storage, retrieval, and data processing of the recorded link data for management of the materials and the at least one storage container. The user interface 122 may support storage management tools, blending tools or both.

In step S306, the processed material is shipped from the at least one storage unit to a destination location. A user may select a sub-set of bins/lots to be shipped by entering filtering criteria. The filtering criteria may include any of the following items: commodity, grade factor greater than a first target value, a grade factor less than a second target value, a quantity for a corresponding commodity, variety, specific bins, a first attribute (e.g., protein) greater than a first target, and a second attribute (e.g. ash) less than a second target, a sub-set of the bins included in the blend, a quantity from each bin, a change in the bin flow type if needed, a calculation of the blend, and scheduling the blend (includes reserving material/locking complexity). An outbound ticket may incorporate the selected filtering criteria and other characteristics of the processed material.

The inventory manager may reserve one or more lots or a part of a lot for a future shipment in an outbound allocation procedure. If blends of the processed material are scheduled, then the lot quantity included in the blends must not be available for other outbound operations, and the shipping module 112 of the data processing system 102 may enforce this rule. A blend that is scheduled (queued) is required to be processed or canceled before the shipping module 112 will allow the lot quantity in the blend to be accessed for other outbound operations.

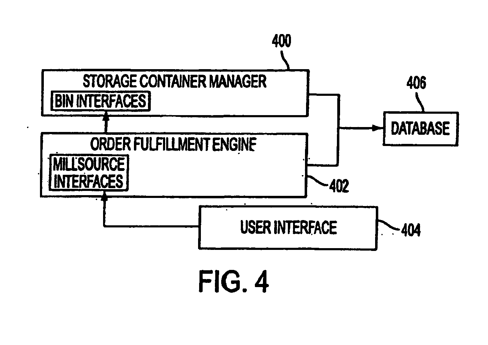

FIG. 4 shows a block diagram of an illustrative architecture for a system for managing the processing of an agricultural product. The architecture comprises an order fulfillment engine 402 that communicates with a storage container manager 400, a user interface 404, and a database 406 to support the delivery of an agricultural product to a defined specification at a specified time to a recipient (e.g., a customer). The architecture configuration of FIG. 4 represents a single enterprise, single-client, and/or single facility deployment configuration.

In one embodiment, the user interface 404 may comprise a device-independent graphical user interface that conforms to standard input and output data streams. The storage container manager 400 will be responsible for facilitating the storage and processing of an agricultural product (e.g., grain) within bins. For example, the storage container manager 400 may provide storage (e.g., grain storage), management, and blending tools. Output from the bin management core-processing engine is delivered to the user via a series of data displays, reports, and data exports that utilize the associated graphical user interface to view.

The order fulfillment engine 402 supports transactions and interactions between a processor (e.g., a mill) and other parties. The order fulfillment engine 402 may receive specifications, orders, and delivery requirements for sales or purchases of an agricultural product, a raw material or a processed material. The order fulfillment engine 402 may support receiving of raw materials, shipping of processed materials, or both.

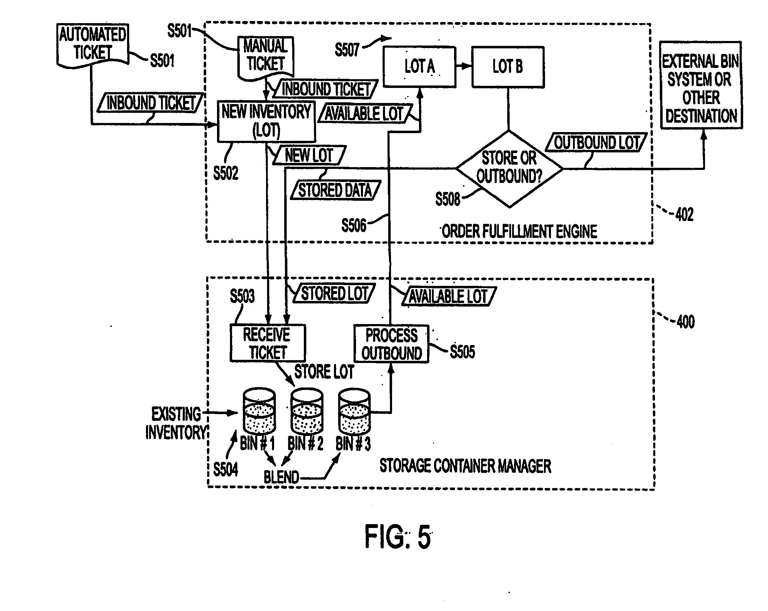

FIG. 5 illustrates a process within the storage container manager 400 and the order fulfillment engine 402. Like reference numbers in FIG. 4 and FIG. 5 indicate like elements.

In step S501, the input to the order fulfillment engine 402 may represent an automated inbound ticket, a manual inbound ticket, or both. The order fulfillment engine 402 may query for available storage containers or available capacity for storing any incoming agricultural product associated with the inbound ticket. The order fulfillment engine 402 may select or assign one or more storage containers with sufficient capacity to accept the incoming agricultural product.

In step S502, the order fulfillment engine 402 creates a new lot in response to user input or data entry of step S501. The order fulfillment engine 402 sends an internal ticket representing the new lot to the storage container manager 400 to direct the agricultural product to a destination storage container or another defined destination.

In step S503, the storage container manager 400 receives the internal ticket, and the storage container manager 400 may execute a process or plan execution of a process based on the received internal ticket. For example, the storage manager 400 may store the new lot based on the received internal ticket. The new lot is stored in a selected or assigned storage container.

In step S504, the storage container manager 400 performs operations to the assigned storage container, its contents, or both. For example, the storage container manager 400 may perform aeration, fumigation, blending, rotation, mixing, transferring, testing, and weighing of an agricultural product within the storage container. As illustrated in FIG. 5, the existing inventory of input agricultural products in Bin 1 and Bin 2 are blended to form a resultant agricultural product for storage in Bin 3.

In step S505, the storage container manager 400 creates an available lot and passes a corresponding second internal ticket to the order fulfillment engine 402.

In step S506, the order fulfillment engine 402 receives the second internal ticket from the storage container manager 400.

In step S507, the order fulfillment engine 402 documents the storage or availability of the available lot of the agricultural product. The order fulfillment engine 402 makes appropriate entries to track the authorized or plan transfer of a defined quantity (e.g., a lot) of agricultural product or lot from an identified storage container to a defined destination.

In step S508, the output of the order fulfillment engine 402 may represent an outbound ticket that is indicative of an outbound lot of the resultant agricultural product. For example, the available lot may be redesignated an outbound lot. The outbound or outgoing ticket may contain data on the specifications of the outgoing lot. The outbound ticket may be transmitted to an external bin system or other destination. In step S508, if the agricultural product is stored, rather than shipped outbound, the method may return to step S503 after such storage occurs.

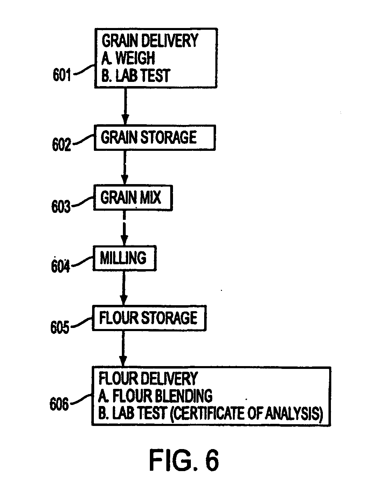

FIG. 6 is a flow chart of a milling process. The method of FIG. 6 begins in step S601.

In step S601, grain is delivered to a mill site. The grain may be weighed, lab tested, or both, prior to acceptance of the delivery of the grain. During step S601, the data processing system 102 may record or support recording of any of the following information: grain variety, date delivered, date emptied, transport, grain lot number, analysis number, and storage container identifier (e.g., bin number).

In step S602, grain is stored in a storage container with an assigned storage identifier. Step S602 may be executed to clean the grain during the storage and to monitor or adjust its moisture content during storage. In one example, the grain undergoes one or more cleanings on or about a cleaning date. The grain may be inspected during storage to monitor the variety, quantity, quality, moisture content, variety of the preceding lot variety, and the storage container identifier (e.g., bin number).

In step S603, the grain is mixed or blended. During step S603, the data processing system 102 may record or support recording of any of the following information: grain mix identifier, date, quantity, preceding grain lot number, and group number.

In step S604, the mixed grain is milled. During step S604, the data processing system may record or support recording of any of the following information: flour lot identifier, analysis job identifier (e.g., analysis job number), client identifier, date, final weight of the grain, gross weight of the grain, milled weight of the milled grain, milling number, quality indicator, comments, fabrication, flour silo emptied, and mix status.

In step S605, the milled grain or flour is stored in one or more storage containers (e.g., flour storage containers). Step S605 may be carried out in accordance with various techniques. The flour may be stored, processed, mixed with other flour or agricultural products or derivatives thereof, or otherwise treated.

In step S606, the stored flour may be retrieved or extracted from inventory for shipping out to a customer or another party. The stored flour may be blended or lab tested prior to shipment to meet a defined specification (e.g., minimum protein content) for the flour. During step S606, the data processing system may record or support recording to any of the following data: flour delivery lot, client identifier, shipment date, analysis identifier (e.g., analysis number), milling identifier (e.g., milling number), and quantity.

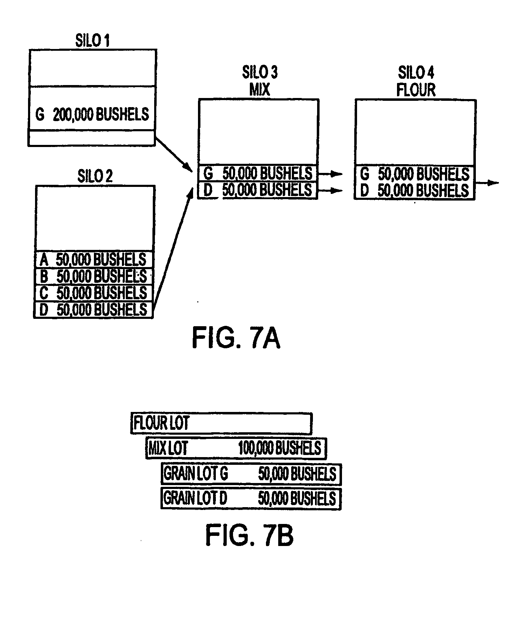

In FIG. 7A, Silo 1 stores 200,000 bushels of grain G. Silo 2 stores 50,000 bushels of grain A, 50,000 bushels of grain B, 50,000 bushels of grain C and 50,000 bushels of grain D. To prepare for mixing, 50,000 bushels of grain G are transferred from Silo 1 into a destination storage container and 50,000 bushels of grain D grain are transferred from Silo 2 into the same destination storage container. After mixing the grain in the destination storage container, the mixed grain is milled into flour and may be stored in Silo 4.

FIG. 7A represents a grain blending operation that may or may not compensate for trace ingredients, trace elements or residual contaminants in the flour stored in Silo 4. When grain is drawn from a first-in, first-out (FIFO) storage container, the grain flows out from the bottom of the storage container. If the storage container has not been cleaned adequately, or at all, since holding another agricultural product or grain, the agricultural product dispensed from the storage container may be or have been contaminated by trace ingredients of the previous agricultural product or grain. Even if the presence of the trace ingredients may not be harmful, the presence of the trace ingredients may effect the quality, grade factor, traits or other aspects of the agricultural product in ways that deviate from expectations. The computer-assisted management of the invention may be applied to tracking the historical contents of the storage containers. If a storage container is inadequately cleaned or not loaded as completely as believed, the identity of the contamination can better be determined by reference to the computer records stored in the data storage device 127 of the data processing system 102.

FIG. 7B represents a traceability map. Here, a flour lot in Silo 4 is an illustrative resultant agricultural product. The flour lot is derived from a mix lot of 100,000 bushels. The mix lot is composed of 50,000 bushels of grain lot G and 50,000 bushels of grain lot D. The purchaser of the flour lot of Silo 4 or the seller may access the traceability map or underlying information therein to facilitate a transaction or tracing of the agricultural product for any other reason, such as a recall.

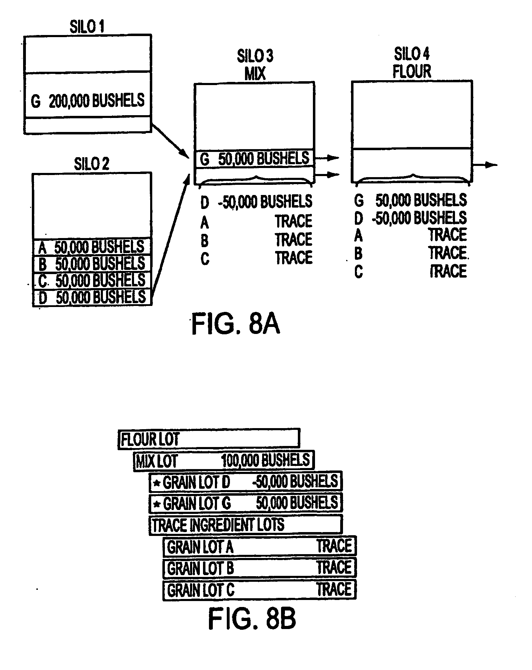

FIG. 8A is an illustrative example of another grain blending operation. The blending operation is similar to that of FIG. 7A. However, the trace elements are tracked from Silo 2, Silo 1, or both, into the destination storage container (e.g., Silo 3) where the grain from Silo 1 and Silo 2 is mixed. Here, the trace elements are defined as the other agricultural products (e.g., grain types) that are stored prior to or simultaneously with the agricultural product of grain lot D in Silo 2 that are transferred to Silo 3. Although the trace elements of FIG. 8A include trace elements A, B, and C, for grain lot D, any combination of trace elements or residual contaminants is possible and may be incorporated from any storage container that is used to store, hold, mix, transfer or process any agricultural product that is used in the final product.

FIG. 8B is a traceability map corresponding to the grain blending operation of FIG. 8A. The traceability map of FIG. 8B is similar to the traceability map of FIG. 7B except the traceability map of FIG. 8B further includes grain lot A, grain lot B, and grain lot C as trace elements or residual contaminants of the mix lot and the flour lot.

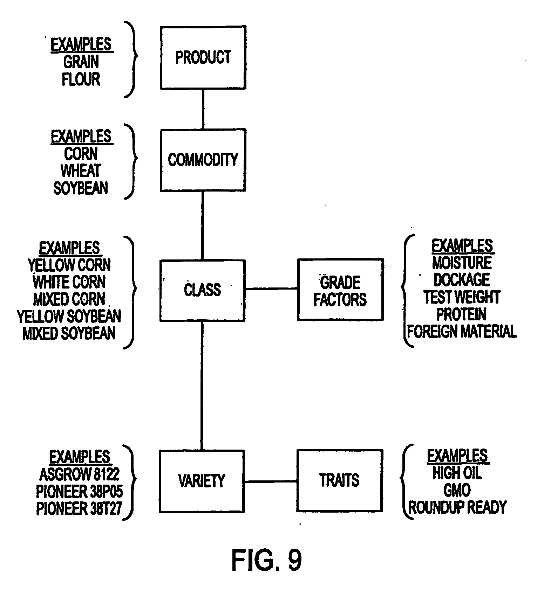

FIG. 9 illustrates a data hierarchy that shows the hierarchical relationship between a product, commodity, class, grade factors, variety, and traits. An agricultural product may be, but need not be, associated with, or derived from, a certain commodity. In turn, the commodity may be characterized as falling under a certain class. Within each class there are one or more varieties. The class may be associated with grade factors that define a quality level of the product within each class. Each variety may be associated with one or more corresponding traits.

An agricultural product may represent a raw product, such as a grain, an intermediate product or a refined product, such as flour. Grade factors may include moisture, dockage, test weight, protein content, and foreign material. Traits include high oil, genetically modified, and Roundup-Ready.

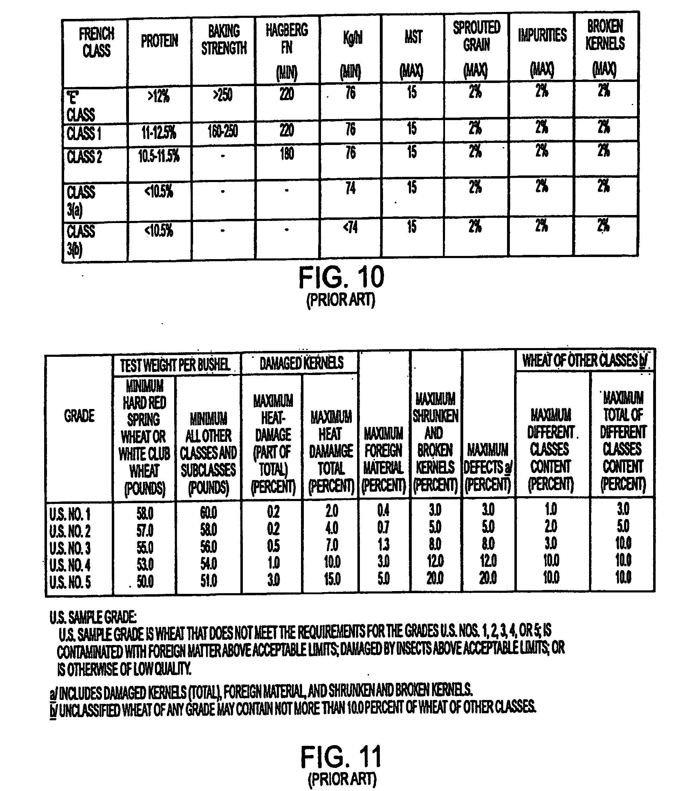

FIG. 10 represents prior art standards for grading wheat in France. The standards include protein content, baking strength, moisture, sprouted grain, impurities, and broken kernels. The standards shown in FIG. 10 may be used as part of the specifications for a raw material or a resultant agricultural product formed in accordance with the method of FIG. 2 or FIG. 3, for example.

FIG. 11 represents prior art standards for grading wheat in the United States of America. The standards include test weight per bushel, damaged kernels, foreign material in percent, shrunken and broken kernels, percent, defects percent, and contrasting classes percent. The standards are set forth in columns and the grades are set forth in the rows. The grades include U.S. No. 1 through U.S. No. 5, inclusive. Further, if the grain does not meet the grade standards of U.S. No. 1 through U.S. No. 5, the grain may be considered U.S. sample grade. The standards shown in FIG. 11 may be used as part of the specifications for a raw material or a resultant agricultural product formed in accordance with the method of FIG. 2 or FIG. 3, for example.

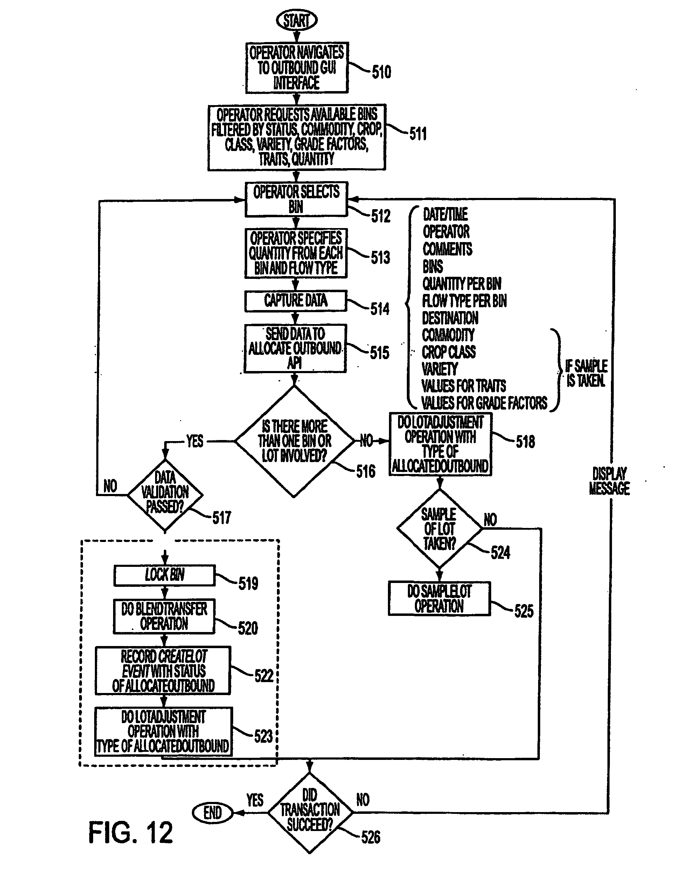

FIG. 12 is a flow chart of a process for managing outbound shipments of an agricultural product. The process of FIG. 12 begins in step S510.

In step 510, an operator navigates to an outbound output or screen of a user interface 122.

In step 511, an operator requests availability information on available storage containers (e.g., available bins) or the agricultural products stored therein by one or more of the following input data inputted by the operator: status, commodity, crop, class, variety, grade factors, traits, and quantity. The operator may input the input data via the user interface 122.

In step 512, an operator selects a particular storage container (e.g., bin) based upon the availability information provided in step 511. For example, the operator may select a particular storage container with an assigned storage container identifier for storage of an agricultural product.

In step 513, an operator specifies a quantity to be extracted from each storage identifier of a corresponding storage container. The storage container may be associated with a flow type that makes a particular agricultural product readily accessible for outbound shipment in a queue or otherwise.

In step 514, data is captured on one or more of the following items: date/time, operator, comments, bins, quantity per bin, flow type per bin, destination, commodity, crop class, variety, values for traits, and values for grade factors.

In step 515, the captured data is sent to allocate an outbound application programming interface (API). The data processing system 102 readily integrates with other enterprise products and software applications to import/export, and process data through the availability of one or more application programming interfaces. Further, the data processing system 102 may support computations, conversions, data validation, business rules for data transfer or data exchange. In one embodiment, the application programming interface (API) supports one or more bin management core functionalities, such as report generation, and value-added, traceability, and regulatory traceability. The API generally adheres to the entire list of general business rules. In another embodiment, the API has a standard message to identify if the processing was successful or failed. If a failure occurs, then the result returned to the caller provides the error information and a message explaining the failure.

In step 516, the data processing system 102 determines if more than one storage container (e.g., bin) or lot is involved in the outbound shipment. If more than one storage container or lot is involved, the process continues in step 517.
However, if less than or equal to one bin or lot is involved, the process continues with step 518.

In step 518, a lot adjustment operation is done with the allocated outbound. The lot adjustment operation adjusts any remaining quantity from which any outgoing lot is composed. The lot adjustment operation may eliminate a contributing lot from which the outgoing lot is composed if the contributing lot has no stored volume or weight remaining in a particular storage container.

In step 524, the data processing system 102 determines whether a sample of a lot is to be taken. If a sample of a lot to be taken, the method continues with a sample lot operation or test procedure in step 525. However, if a sample of a lot is not to be taken, the method continues with step 526.

In step 526, the processor determines if a transaction succeeds or not. If the transaction is not successful, the process returns to step 512. Further, in one illustrative embodiment, the user interface 122 may display a defined message to the operator on the failure of the transaction. However, if the process is successful, the process ends following step 526.

In step 517, which may occur after step 516 if there are more than one storage container or lot involved, the data processor determines if the data is valid through a data validation procedure. In one embodiment, the data validation procedure applies data integrity rules with respect to data values, data structures, data derivation, and data retention. The data integrity rules may be associated with corresponding data integrity rule names, data integrity rule enforcement procedures, predefined default values for certain data, error detection algorithms or error detection and correction algorithms. If the data passes the data validation procedure, the process continues with step 519. If the data does not pass the data validation procedure, the process returns to step 512.

In step 519, a particular storage container (e.g., bin) is locked in preparation for a blending or mixing procedure.

In step 520, a blending operation or blending transfer operation is completed with respect to the locked storage container. Two or more different lots are blended and a resultant lot is formed.

In step 522, an event indicative of the creation of the resultant lot is formed. The resultant lot is allocated for outgoing shipment.

In step 523, a lot adjustment operation is formed based on the quantity and identity of the allocated outbound or outgoing agricultural product. After step 523, step 526 may be executed to determine if the transaction succeeded. If the transaction succeeded, the process ends after step 526. However, if the transaction did not succeed, the process may continue with step 512.

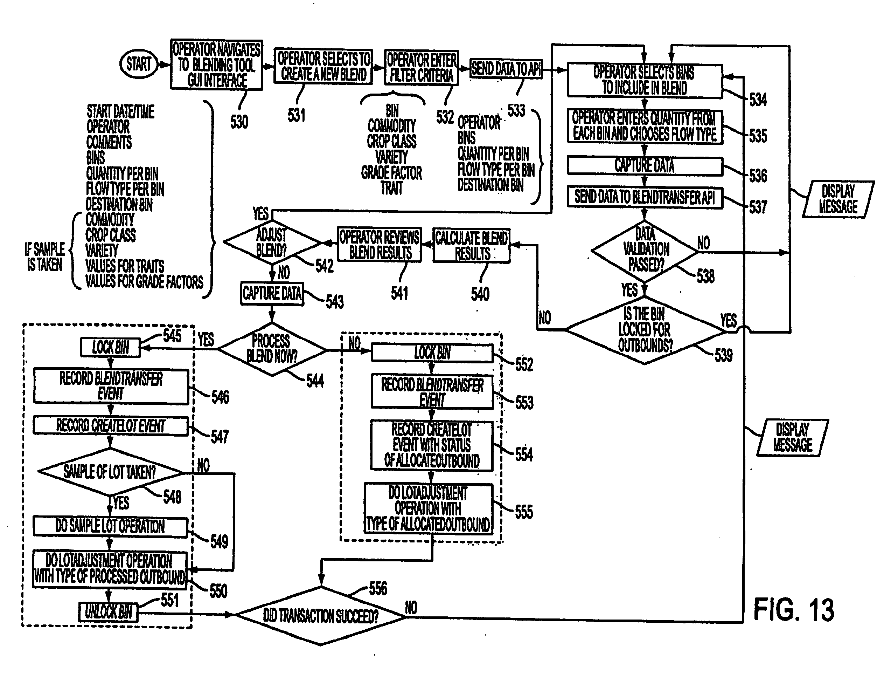

FIG. 13 relates to a method for blending two or more agricultural products. For example, agricultural products may be blended to produce a resultant agricultural product compliant with a defined trait or a defined specification. The method of FIG. 13 begins in step 530.

In step 530, an operator navigates to a blending tool of the user interface 122 (e.g., graphical user interface).

In step 531, an operator selects or enters a command to create a new blend of raw materials or other agricultural products.

In step 532, an operator enters a filter criteria. For example, the operator may enter one or more of the following filter criteria to select the constituent materials (e.g., raw materials for the blend): storage container, bin, commodity, crop class, variety, grade factor, and trait.

In step 533, an operator sends filter criteria data or the selected constituent material to the application programming interface (API).

In step 534, the operator selects storage identifiers for storage containers containing the constituent materials to be blended.

In step 535, the operator enters a quantity from each bin or storage container to form the resultant agricultural product. The operator may enter or select a flow type for the corresponding bin to assure the appropriate constituent materials are available for the blend.

In step 536, data is captured on the blending operation.

In step 537, the captured data is sent to an application programming interface. The captured data may include, but need not include, any of the following items: operator, bins, quantity per bin, flow type per bin, destination bin, blending data, and blend transfer data. A BlendTransfer will not occur if there is less than one lot. A BlendTransfer can handle multiple bins, but the operator must specify either the quantity or percentage of the total quantity for each bin. A BlendTransfer can contain more than one destination bin, but the operator must specify the percentage for each bin as well as a name for each lot. A BlendTransfer operation must have a date/time, operator, source bin(s), and destination bin(s). The destination bin and source bin may be defined as the same bin. BlendTransfer may call the Sample operation, but this is not required. If more than one lot with quantity > 0 exists in the source bin, the lots are blended and then transferred. System will throw a warning if any source bin has a lock status of LockOutbound. System will throw a warning if any destination bin has a lock status of Locklnbound.

In step 538, the data processing system 102 determines if the captured data passes a data validation. If the captured data passes a data validation procedure, the method continues with step 539. However, if the data processing system 102 fails to pass a data validation procedure, the method returns to step 534. In step 539, it is determined if the bin is locked for outbound shipment.

In step 540, the blend results are calculated, estimated or determined in advance of any actual blending operation. For example, the estimated blend results includes the blend characteristics of a resultant agricultural product formed by blending two or more materials. The blend characteristics may be estimated based on mathematical calculations based on one or more constituent products (e.g., raw materials) and/or actual measurements of constituent characteristics thereof.

In step 541, an operator reviews the estimated blend results to determine if the results are consistent with a defined specification (e.g., standard quality designation or a particular customer requirement).

In step 542, the blend may be adjusted based on the estimated blend results. If the blend is adjusted, the method returns to step 534. However, if the blend is not adjusted, the method continues with step 543.

In step 543, data is captured regarding the blend that forms the blend results. The captured data may include one or more of the following: start date/time, operator, comments, bins, quantity-per-bin, flow-type-per-bin, destination bin, commodity, crop class, variety, values for traits, and values for grade factors.

In step 544, it is determined whether to initiate the blending process. If the blending process is initiated, the method continues with step 545. However, if the blending process is not initiated, the method continues with step 552.

In step 545, an applicable storage container contains the constituent materials to be blended and the applicable storage container is locked or otherwise secured.

In step 546, a blending event represents the blending of constituent materials in the applicable storage container, and the blending event is recorded.

In step 547, a lot creation is recorded as an event. The resultant lot is associated with characteristics of the resultant product.

In step 548, it is determined whether to take a sample of a particular lot within a storage container (e.g., bin). If a sample lot is taken, the method continues with step 549. If the sample lot is not taken, the method continues with step 550.

In step 549, a sample lot operation is performed to determine if the resultant lot meets the definition specification.

In step 550, a lot adjustment operation is completed to adjust the processed outbound agricultural product if it is nonconformal with the defined specification.

In step 551, the storage container (e.g., bin) is unlocked.

In step 556, the data processor determines whether the transaction succeeded. If the transaction succeeded, the method continues with step 534.

Step 552 may occur after step 544 if the blend process is not executed now. For example, step 544 may apply if there is a pre-existing inventory or sufficient stock of a resultant agricultural product to satisfy a specification.

In step 552, the storage container (e.g., bin) is locked.

In step 554, the data processor records a lot creation event. The lot creation event deals with the status of allocating the outbound agricultural product.

In step 555, the data processor has a lot adjustment operation with the type of allocated outbound.

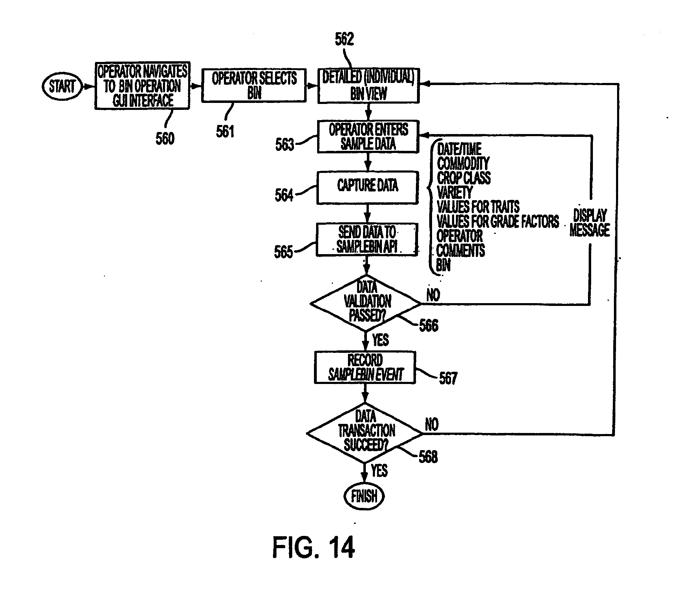

FIG. 14 illustrates a method for sampling the contents of storage containers and performing tests or status information on the contents. The method of FIG. 14 begins in step 560.

In step 560, an operator navigates to a bin operation of the user interface 122.

In step 561, an operator selects a bin for sampling of the contents or agricultural product within the bin.

In step 562, an operator views a bin view of the selected bin via the user interface 122.

In step 563, an operator enters sample data regarding test parameters for the sampling of the bin. The sample data may include one or more of the following: date/time, commodity, crop class, variety, values for traits, values for grade factors, operator comments, and bin identifier.

In step 564, data is captured on one or more of the following items: date, time, commodity, crop class, variety, values for traits, values for grade factors, operator, comments, and bin.

In step 565, data is sent to a sample bin application programming interface (API).

In step 566, the data processor determines if a data validation procedure was passed; if the data validation procedure was passed, the method continues with step 567. If the data validation procedure was not passed, the method continues with step 566.

In step 567, a sampling event is recorded. The sampling event concerns sampling of the contents of a bin.

In step 568, the data processor determines if the transaction succeeded.
If the transaction succeeded, the method ends after step 568. However, if the transaction did not succeed, the method may return to step 562.

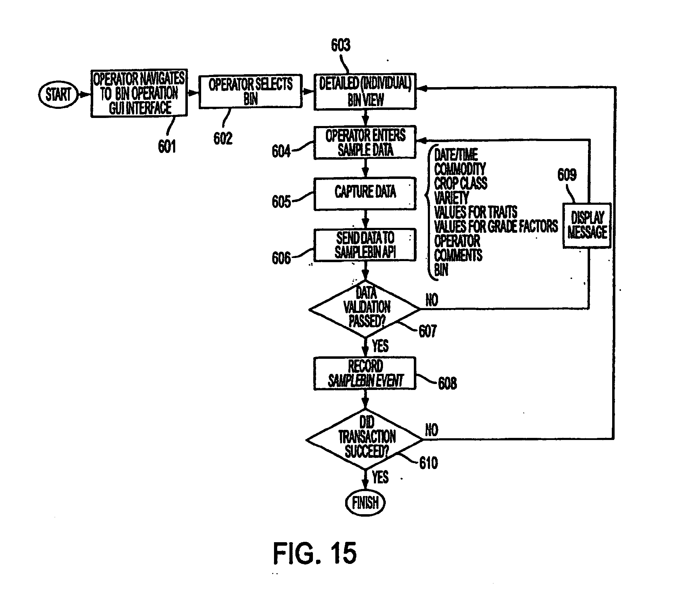

FIG. 15 illustrates a method of sampling the contents of a bin. The method of FIG. 15 starts in step 601.

In step 601, an operator navigates to a bin operation on a user interface 122 of the data processing system 102.

In step 602, an operator selects a bin or storage container from which to sample its contents. For example, an operator selects a storage container identifier for a corresponding storage container to be sampled.

In step 603, the data processing system may provide a detailed bin view for the selected bin or storage container in response to the operator's selection of the particular storage container. The detailed bin view may contain data on an agricultural product within a bin and a storage container history in terms of events.

In step 604, an operator may enter sample data into the data processing system 102 for taking a sample of the contents or agricultural product within the selected bin. The sample data may specify a particular sample size, sample time, storage container identifier, and test parameters, for example. The test parameters may include test traits and test grade factors.

In step 605, data is captured in accordance with the specified sample data. The captured data may include one or more of the following: date stamp, time stamp, commodity identifier, crop class, variety, values for traits, values for grade factors, operator identifier, comments, and storage identifier.

In step 606, the captured data may be sent to an application programming interface (API) to make the captured data available to a software application, such as an external software application or a database.

In step 607, the captured data is tested to determine if the captured data passes a data validation test. If the captured data passes the data validation, the method continues with step 608. However, if the captured data does not pass the data validation, the method continues with step 609.

In step 608, a sample bin event is recorded. The sample bin event may be recorded or stored in a data storage device 127 or database for subsequent reference. The sample bin event may comprise the captured data associated with the sample of the selected storage containers.

In step 609, a display message is displayed to an operator. For example, the display message may represent an error message that indicates a reason for the captured data failing to pass the validation test of step 607.

In step 610, the data processing system 102 determines if the bin sampling transaction of FIG. 15 succeeded. If the bin sampling transaction succeeded, the method of FIG. 15 ends. However, if the transaction does not succeed, the method continues with step 603.

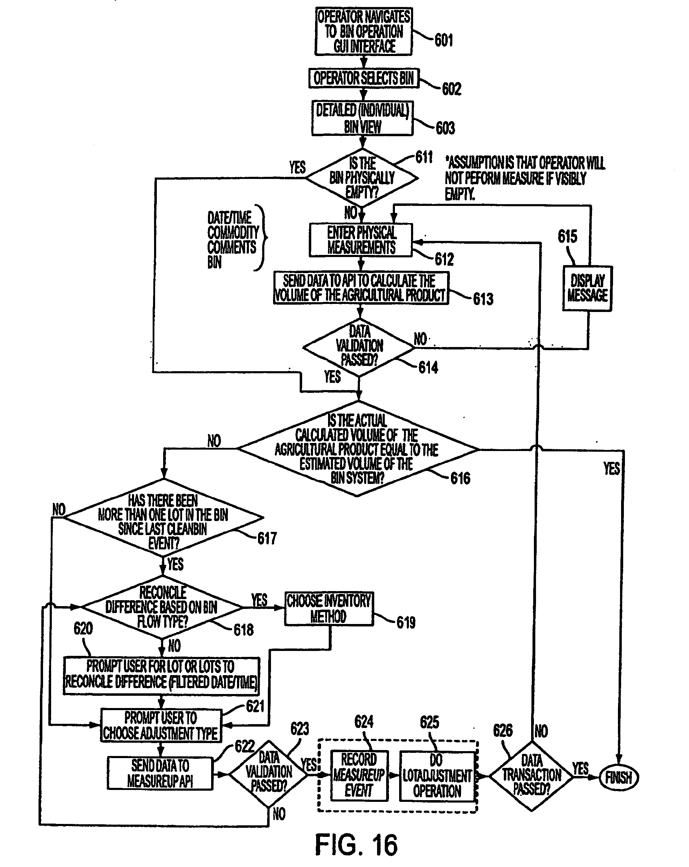

FIG. 16 illustrates a method of verifying the volume or weight within a particular storage container. The method of FIG. 16 begins in step 601. Like reference numbers in FIG. 15 and FIG. 16 indicate like steps or procedures.

After steps 601, 602, and 603, in step 611, the data processing system 102 determines whether a particular storage container or particular bin is physically empty. If the particular storage container or bin is empty, the method continues with step 616. If the particular storage container or bin is not empty, the method continues with 612.

In step 612, an operator enters or the data processing system 102 otherwise receives a physical measurement that is indicative of the volume, quantity or weight of an agricultural product in a corresponding particular storage container. For example, the operator may read the height of a particular stored agricultural material in a particular container using a manual or optical sight gauge. The height of the stored agricultural material may be used to derive an actual volume or actual weight of the stored agricultural material stored in a particular storage container. In one example, an operator may enter any of the following items: the dimension of an agricultural material within a particular storage container, the weight of an agricultural material within a particular storage container, date, time, operator, comments, and storage container identifier.

In step 613, the physical measurement is provided to the application programming interface or another conversion module for determining the actual volume or actual weight of the stored agricultural material stored in the particular storage container. If the weight was previously provided in step 612, the conversion module may determine or estimate the corresponding volume, or vice versa.

In step 614, the data processing system 102 applies a data validation test to the actual volume or actual weight determined in step 613. If the actual volume or actual weight of the agricultural product meets the data validation test, the method continues with step 616. However, if the actual volume of the agricultural product fails to meet the validation test, the method continues with step 615.

In step 615, the data processing system 102 may display a message indicating that the data is invalid.

In step 616, the data processing system 102 determines whether or not the determined actual volume or weight of the agricultural product in a particular storage container materially differs from the expected volume or weight of the agricultural product in the particular storage container. The expected volume or weight of the agricultural product in the particular storage container may be gleaned from shipping documents or receiving records on the incoming agricultural product, for example. If the actual volume or weight of the agricultural product does not materially differ from the expected volume or weight of the agricultural product, the method may end. Prior to ending, the data processing system 102 may display a message to a user that the volume or weight in a particular storage container has been verified. However, if the actual volume or weight of the agricultural product materially differs from the expected volume or weight, the method continues with step 617.

In step 617, the data processing system 102 determines if there has been more than one lot of the agricultural product in the particular storage container since the last bin cleaning (e.g., CleanBin event). If there has been more than one lot in the particular storage container since the last bin cleaning, the method continues with step 618. Otherwise, the method continues with step 621.

In step 618, the data processing system 102 determines if the material difference can be reconciled based on the inventory method or bin flow type associated with the storage container over a relevant time period. For example, the system 102 determines if the actual inventory method used is different from the selected inventory selection chosen by an operator. If the data processing system 102 determines that the difference may be reconciled by bin flow type, the method continues with step 619. However, if the data processing system 102 determines that the difference may not be reconciled by bin flow type, the method continues with step 620.

In step 619, the appropriate inventory method is selected such that the actual inventory method and the selected inventory method match one another. In one example, the actual inventory method and the selected inventory method may both be first-in, first-out (FIFO). In another example, the inventory method is changed from FIFO to last-in, first-out (LIFO), or vice versa, to reconcile the difference. In yet another example, the inventory method is changed from LIFO or FIFO to a perpetual inventory management technique.

In step 620, a user is prompted to enter one or more or lot identifiers to reconcile the material difference between the actual volume or weight and the expected volume or weight of the agricultural product. A library of available lots for reconciliation may be presented to the user by filtering the lots or bins associated with the particular storage container by date and time. The user may note suspect lots from the library that might require adjustment to reconcile the difference.

After step 619 or 620, the method continues with step 621 in which a user is prompted to choose an adjustment type. The user may select from various adjustment types including a lot adjustment.

In step 622, data is send to an application programming interface for "measuring up" or discrepancy resolution procedures for the quantity of the agricultural product.

In 623, the data processing system determines whether the data validation test was passed for the data sent to the application programming interface. If the data validation test was passed, the method continues with step 624. However, if the data validation test fails, the method returns to step 618.

In step 624, the data processing system records a measuring validation event (e.g., MeasureUp Event) based on the previous steps. The measuring validation may indicate whether the quantity discrepancy was reconciled by bin flow type or inventory method or lot adjustment. A MeasureUp Event may comprise reconciliation data on a change in a flow-type, on a change in an individual lot selection or otherwise based on operator data input. A MeasureUp that reconciled based on flow-type will perform calculations based on all lots associated with the bin since the last CleanBin operation. A MeasureUp reconciled based on lots will force the operator to choose the lots from a list and specify how to distribute the quantity between the lots chosen.

In step 625, the data processing system may complete a lot adjustment operation to resolve any problem with respect to a lot stored in the particular storage bin. For example, a user revises a quantity of a particular lot upward or downward such that the actual volume or actual weight approximately equals the expected weight or expected volume.

In step 626, the data processing system determines whether or not the transaction succeeded. If the transaction succeeded, the method of FIG. 16 ends. If not, the method resumes with step 612.

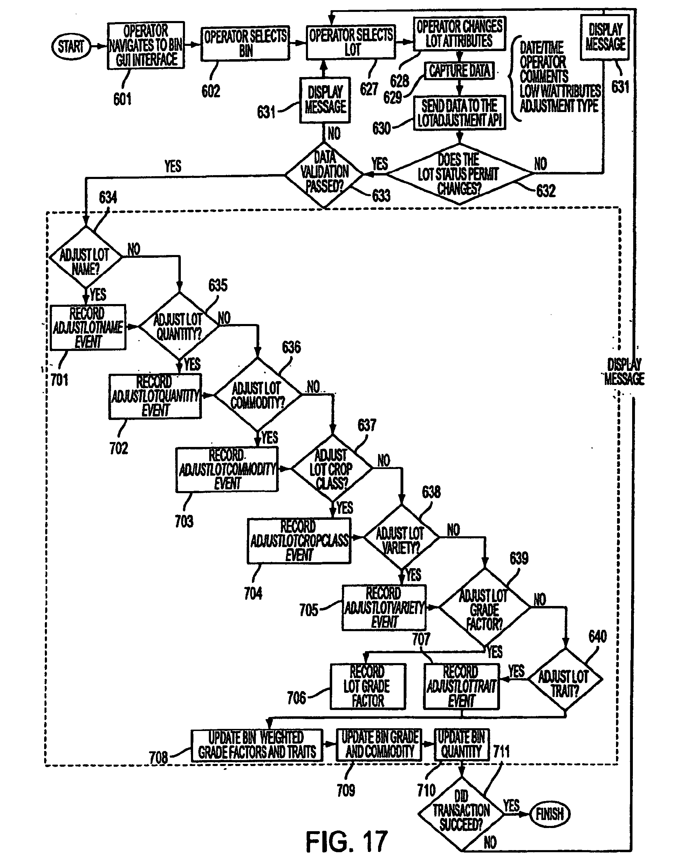

FIG. 17 illustrates a method of managing a lot of an agricultural product. The method of FIG. 17 begins in step 601. Like reference numbers in FIG. 15 and FIG. 17 indicate like elements.

After steps 601 and 602, the method continues with step 627 in which an operator selects a lot of an agricultural product.

In step 628, the operator changes one or more lot attributes associated with the selected lot of the agricultural product.

In step 629, the operator captures data on the changed lot attributes including one or more of the following items: date/time, operator identifier, comments, lot attributes, and adjustment type.

In step 630, the operator sends data to the application programming interface or other module associated with adjustment of a lot.

In step 632, the processing system determines if the lot status permits changes. If the lot status permits changes, the method continues with step 633. However, if the lot status does not permit changes, the method continues with step 631.

In step 631, the method may display a display message that indicates that the lot status does not permit a change or another suitable alarm or announcement for an operator.

In step 633, if the data validation test is passed, the method continues with step 634. If not, the method continues with step 631.

In step 634, the data processing system determines whether to adjust a lot name based on operator input from the captured data or otherwise. If the lot name is adjusted, a revised lot name or an adjusted lot name event (e.g., AdjustLotName Event) is recorded in step 701. If not, the method continues with step 635.

In step 635, the data processing system determines whether to adjust a lot quantity based on operator input from the captured data or otherwise. If the lot quantity is adjusted, a revised lot quantity is recorded in step 702. If not, the method continues with step 636.

In step 636, the data processing system determines whether to adjust a lot commodity based on operator input from the captured data or otherwise. If the lot commodity is adjusted, a revised lot commodity is recorded in 703. If not, the method continues with step 637.

In step 637, the data processing system determines whether to adjust a lot crop class based on operator input from the captured data or otherwise. If the lot crop class is adjusted, a revised lot crop class is recorded in step 704. If not, the method continues with step 638.

In step 638, the data processing system determines whether to adjust a lot variety based on operator input from the captured data or otherwise. If the lot variety is adjusted, a revised lot variety is recorded in step 705. If not, the method continues with step 639.

In step 639, the data processing system determines whether to adjust a lot grade factor based on operator input from the captured data or otherwise. If the lot grade factor is adjusted, a revised lot grade factor is recorded in step 706. If not, the method continues with step 640.

In step 640, the data processing system determines whether to adjust a lot trait based on operator input from the captured data or otherwise. If the lot trait is adjusted, a revised lot trait is recorded in step 707. If not, the method continues with step 708.

In step 708, the bin or storage container is updated with weighted grade factors and traits, consistent with any prevision revisions or adjustments to the lot data in the method of FIG. 17. For example, data is updated, where the data is associated with a particular storage container affiliated with the adjustments to a lot.

In step 709, the bin grade and commodity are updated bin grade, updated commodity, or both, consistent with any previous revisions or adjustments to the lot data in the method of FIG. 17.

In step 710, the bin quantity is updated consistent with any previous revisions or adjustments to the lot data in the method of FIG. 17.

In step 711, the data processing system determines whether the transaction succeeded. If the transaction succeeded, the method of FIG. 17 ends. However, if the transaction did not succeed, the method returns to step 627.

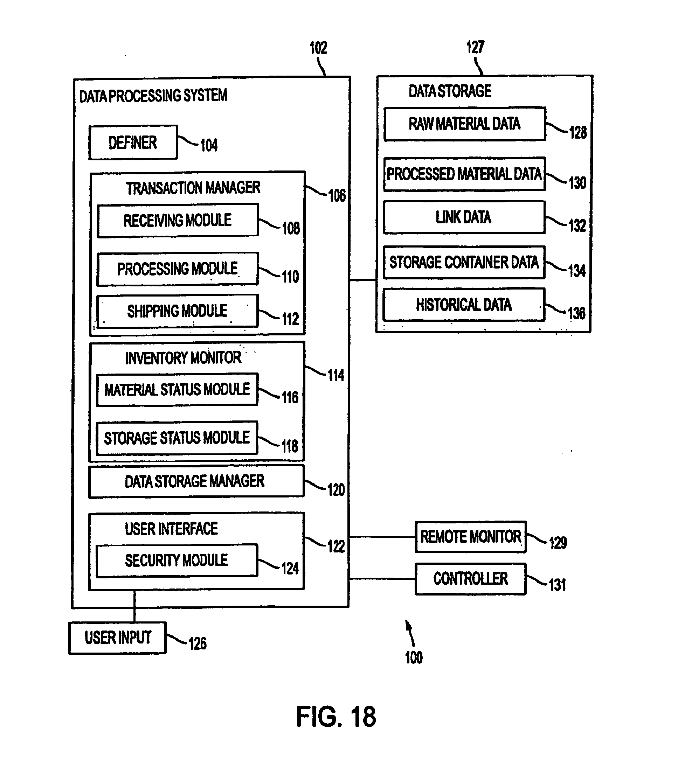

The configuration of FIG. 18 is similar to the configuration of FIG. 1 except the data processing system 102 of FIG. 18 interfaces a remote monitor 129, a controller 131 (e.g., programmable logic controllers (PLCs), or both, for monitoring the status of a storage container or the status of an agricultural product. Like reference numbers in FIG. 1 and FIG. 18 indicate like elements.

The controller 131 may automatically open valves, control heaters, control cooling systems, control dryers, control humidifiers, control motors, control augers, or operate other devices associated with one or more storage containers. The remote monitor 129 may take temperatures, determine moisture, sense measurements or sense other conditions associated with one or more storage containers or their contents. Although the remote monitor 129 and the controller 131 may be connected to the data processing system 102 via wireline or cable, other configurations are possible and fall within the scope of the invention.

In an alternate embodiment, the remote monitor 129, the controller 131, or both, may communicate with the data processing system 102 via a wireless link or wireless network. The wireless link may comprise a transmitter associated with the remote monitor 129 and a receiver associated with the data processing system 102 that communicate with each other via an electromagnetic signal (e.g., radio frequency signal).

The management system and method facilitates reducing the time and cost of producing a blended product that meets specific customer requirements by managing an agricultural product at the lot-level as the agricultural product moves through the production process. The management system facilitates optimization of blending and processing and increases storage throughput by coordinating grain movements among bins. Grain storage, inventory management, and blending processes may be readily integrated by an information management system to achieve efficient processing operation. Greater accuracy in blending supports the

potential for increased profit for each bushel of grain shipped or processed. By blending down to the quality requested, by the grain purchaser, it prevents the enterprise or processor from selling a higher quality grain at a lower quality price.

The computer-assisted management of an agricultural product facilitates inventory management by providing ready access to information. Grain and related lab tests may be stored by bin and related production lot to facilitate prompt decision-making information. The enterprise can make contract fulfillment decisions, can quickly identify and respond to inventory issues that may affect the quality, and therefore the value, of the commodity being stored. A user of the management system and method may provide proof of product heritage or background information on the agricultural product (e.g., processed material) for regulatory compliance, cultural or consumer acceptances, and technical conformity to defined specifications of an agricultural product.

The management system and method provides the operator the ability to manage any of the following activities: the storage of any bulk product in its various states, inventories in off-site storage facilities (e.g., on farm storage facilities storing non GMO grains). Off-site storage or inventory tracking may be used to expand storage capacity without adding to a processor's capital investment. It will also give more timely and accurate information of a processor's agricultural product inventory (e.g., grain position) by allowing interfacing of bin monitoring equipment.
Accordingly, the user may access high reliability information on agricultural product position, quantity, and quality to meet quality and volume processing objectives on a timely basis.

The computer-assisted management system and method may assign dedicated functionality or different storage container types for different uses or processes. For example, different bin types may be created for grain storage, mixing, flour storage, and/or flour delivery based on the operations specific process.

The management system promotes improved management of inventory with a current readily accessible status of available grain. Monitoring of current bin moisture allows the operator to catch problems early and avoid grain quality degradation thus protecting the grain value. The management system and method represents a real-time information system that provides the operator the ability to make inbound and outbound grain decisions based on available capacity without having to access a graphical representation of the storage container status to check on inventory levels.

The management system and method improves management decision-making with more timely and accurate information. Multiple blend scenarios can be created readily and consistently, while automatically maintaining records for tracking. The reduction of human error increases the accuracy of a blend. The enterprise can perform better bin planning for best inventory utilization. The method and system reduces time in man-hours by replacing paper forms with online tools to track inventory and calculate blends. Quality control is improved through accurate grain tracking and insuring the associated integrity of the product being managed, prevention of accidental mixes and the associated reduction in value of the product, and reduction of handling of grain lots which is the greatest source of damage to grain.

Time to blend is reduced by providing an online tool to calculate blends based on current information about available inventory and customer specifications stored in the system. Multiple blend possibilities can be run based on customer targets which improve management decisions of more profitable product delivery. This has been time consuming in the past but this potential blend data can be exposed globally, if needed, for best decisions.

The management system facilitates reducing the number of blends and waste by determining optimal blending electronically or on a virtual basis prior to actual physical blending of the agricultural products. Profitable grain handling and milling is promoted by effective blending of inventory. Here, the data processing system supports both operational blending decisions based on facility management and merchandising blending based on customer targets.

The system and method supports management of agricultural products for tracking the materials of the agricultural product across any transformation from a raw material to a derivative product. The system operation in a network mode which participants communicate over a communications network link in a store and forward mode in which communications may take place on a regular basis with various communications rules. In a store and forward mode, participants communicate only a change in the data at their location or at regular intervals, rather than maintaining continuous communication.

The system and method of the invention support the management of storage containers housing raw materials (e.g., wheat, grain, corn or soybeans), intermediate processed materials (e.g., malted barley, crushed soybeans or crude oil) and processed ingredients (e.g., wheat flour or refined oil). The system and method facilitates tracing of an agricultural product or identity preservation through one or more of the following: a supply chain, processing, manufacturing, distribution, retail, operations management, and other transactions or transformations of the agricultural product. The system and method is well suited for application to mill operations, including tracking of storage and blending information on operations within a mill. The system and method has general application to tracing the storage, inventory, and logistics associated with agricultural products stored in one or more storage containers, at one or more locations, and at one or more facilities to achieve coordination.

The system and method of the invention facilitates reduced time and cost of producing blended agricultural products or other agricultural products or derivatives thereof that meet defined specifications. The defined specifications may be defined by customer requirements, specifications imposed by regulatory requirements, specifications imposed by the processor or manufacturer or otherwise. The system and method enables inventory to be managed at the lot-level as the inventory of the agricultural product, derivatives or precursors thereto move through the production process. Inventory reduction can lead to improved financial performance of mills and just-in-time operations, for example. Automated calculation of blending proportions or different agricultural products to achieve desired output results of the blended agricultural product may improve the temporal efficiency of blending operations and increase the coordination of the agricultural product (e.g., grain) through a mill or other processing plant. The management system and method supports grain storage (e.g., wheat storage) at a flourmill, processing of oilseed, and processing of fruit or vegetable juice.

Having described the preferred embodiment, it will become apparent that various modifications can be made without departing from the scope of the invention as defined in the accompanying claims.

## Claims

1. A method for managing an agricultural product, the method comprising:
storing a raw material in a storage container;
physically processing the stored raw material in the storage container to obtain a processed material based on the raw material;
recording link data for associating the raw material with the processed material across any transformation between the raw material and the processed material; and
facilitating at least one of retrieval and data processing of the recorded link data for management of at least one of an agricultural product and a storage container associated with the agricultural product.

2. The method according to claim 1 wherein the processing comprises blending the stored raw material to obtain a target trait value of the stored raw material.

3. The method according to claim 1 wherein the processing comprises blending multiple stored raw materials together to form the processed material.

4. The method according to claim 1 wherein the processing comprises coordinating movements of the raw material, the processed material, blended material, and any derivatives of the raw material, the processed material, and the blended material among storage containers.

5. The method according to claim 1 wherein the storage container is associated with a storage identifier, each raw material associated with a corresponding storage identifier having material attributes, the material attributes including one or more of the following: quantity of the stored raw material, quantity of the processed material, protein content, total weight, moisture, foreign matter, defects, color, material identifier, material variety identifier, and mixture.

6. The method according to claim 1 further comprising:
associating a lot of an agricultural product with a corresponding particular storage container;
assigning at least one trace element to the lot based on one or more previous agricultural products stored in the particular storage container;
informing a downstream recipient of the lot of the at least one assigned trace element in the lot.

7. The method according to claim 6 further comprising:
limiting the assigned trace element to the previous agricultural products stored in the particular storage container prior to a last cleaning of the particular storage container.

8. The method according to claim 1 wherein the physical processing comprises blending two or more raw materials to obtain the processed material compliant with an attribute selected from the following group: protein content, baking strength, sprouted grain, broken kernels, grade, test weight per bushel, damaged kernels, heat damage percent, total damage percent, foreign material percent, percent shrunken and broken kernels, and defects percent.

9. The method according to claim 1 wherein the physical processing comprises blending two or more raw materials to obtain a processed material compliant with a governmental grade for wheat selected from the following group: United States number 1, United States number 2, United States number 3, United States number 4, United States number 5, United States sample grade, French E class, French class 1, French class 2, French class 3(a) and French class 3(b).

10. The method according to claim 1 further comprising:
verifying an estimated quantity of the raw material in the particular storage container;
adjusting the estimated quantity of the raw material to conform to an actual measured quantity of the raw material by adjusting at least one of a lot quantity of a particular lot of the raw material and a flow type associated with the particular storage container.

11. A system for managing an agricultural product, the system comprising:
a transaction manager for physically processing a stored raw material in a storage container to obtain a processed material based on the raw material;
a data storage manager for recording link data for associating the raw material with the processed material across any transformation between the raw material and the processed material; and
a user interface for facilitating at least one of retrieval and data processing of the recorded link data for management of at least one of an agricultural product and the storage container associated with the agricultural product.

12. The system according to claim 11 wherein the transaction manager comprises a processing module for blending the stored raw material to obtain a target trait value of the stored raw material.

13. The system according to claim 11 wherein the transaction manager comprises a processing module for blending multiple stored raw materials together to form the processed material.

14. The system according to claim 11 further comprising a receiving module for coordinating movements of raw material to or from the storage container.

15. The system according to claim 11 further comprising a shipping module for coordinating movements of the raw material, processed material, blended material, and any derivatives of the raw material, the processed material, and the blended material from or between the storage containers.

16. The system according to claim 11 wherein the storage container is associated with a storage identifier, each raw material associated with a storage identifier having material attributes, the material attributes including one or more of the following:
quantity of stored raw material, a quantity of the processed material, protein content, total weight, moisture, foreign matter, defects, color, material identifier, material variety identifier, and mixture.

17. The system according to claim 11 further comprising:
an inventory monitor for associating a lot of an agricultural product with a corresponding particular storage container, the inventory monitor assigning one or more trace elements to the lot based on at least one previous agricultural product stored in the particular storage container;
the user interface informing a downstream recipient of the lot of the assigned trace elements.

18. The system according to claim 17 wherein the inventory monitor limits the assigned one or more trace elements to the previous agricultural products stored in the particular storage container prior to the last cleaning of the particular storage container.

19. The system according to claim 11 further comprising:
an inventory monitor for monitoring a status of at least one of the material and the storage container;
a remote monitor communicating a status of the at least one of the material and the storage container to the inventory monitor.

20. The system according to claim 11 further comprising a controller for controlling at least one of the material and the storage container associated with the material, a processing module of the transaction manager communicating with the controller.
